# NEUE EUROPÄISCHE PATENTSCHRIFT

(11) **EP 1 140 408 B2**
(45) Veröffentlichungstag und Bekanntmachung des Hinweises auf die Entscheidung über den Einspruch: **05.01.2005**
(45) Hinweis auf die Patenterteilung: 03.07.2002
(21) Anmeldenummer: 99962100.6
(22) Anmeldetag: 25.11.1999
(51) Int. Cl.: B23C 5/20

(54) **SCHNEIDEINSATZ UND WERKZEUG MIT SCHNEIDEINSATZ**
CUTTING INSERT AND TOOL HAVING A CUTTING INSERT
PIECE DE COUPE RAPPORTEE ET OUTIL MUNI D'UNE PIECE DE COUPE RAPPORTEE

(30) Priorität: 18.12.1998 DE 29822553 U
(43) Veröffentlichungstag der Anmeldung: 10.10.2001
(73) Patentinhaber: Widia GmbH, 45145 Essen (DE)
(72) Erfinder: ROTHBALLER, Gerhard, D-91611 Lehrberg (DE)
(74) Vertreter: Vomberg, Friedhelm, Dipl.-Phys.
(86) Internationale Anmeldenummer: PCT/DE1999/003785
(87) Internationale Veröffentlichungsnummer: WO 2000/037205

(56) Entgegenhaltungen:
- EP-A- 0 370 563
- DE-A- 19 703 569
- DE-U- 9 110 831
- FR-A- 2 223 122
- FR-A- 2 532 573
- JP-A- 5 757 847
- SE-A- 311 795
- US-A- 4 335 984
- US-A- 4 441 841
- US-A- 4 986 151
- Produktkatalog "Rotierende Werkzeuge", S.30
- Produktkatalog "Fräswerkzeug", S.50

## Beschreibung

Die Erfindung betrifft einen Schneideinsatz gemäß dem Oberbegriff von Anspruch 1 (z.B. US 4 441 841).

Die Erfindung betrifft ferner ein Werkzeug, bestehend aus einem Werkzeughalter mit mindestens einer Ausnehmung zur Aufnahme eines solchen Schneideinsatzes.

Fräsarbeiten werden häufig in zwei Arbeitsgängen durchgeführt, einem Vorfräsen (Schruppen) und einem Schlichten. Dem kann in einem kombinierten Schrupp-Schlicht-Werkzeug dadurch Rechnung getragen werden, daß ein Teil der in vorgesehenen Ausnehmungen (Plattensitzen) des Werkzeughalters eingespannten Schneideinsätze als reine Schrupp-Werkzeuge und die übrigen als Schlicht-Werkzeuge benutzt werden. Beispiele für Schlicht-Schneideinsätze werden in der die Beschreibung des nächstkommenden Standes der Technik darstellenden DE 197 03 569 A1 beschrieben. Der dortige Schneideinsatz, der vorzugsweise eine regelmäßige sechseckige Spanfläche hat, besitzt mehrere Hauptschneiden und sich hieran anschließende Nebenschneiden. Wie in dieser Druckschrift beschrieben, wird ein dortiger Schneideinsatz in Kombination mit einem reinen Schneideinsatz zum Schruppen verwendet.

Der in der DE 197 03 569 A1 beschriebene Schneideinsatz weist im Anschluß an die Nebenschneide eine konkave Spanformnut auf, deren Radius zwischen 0,5 mm und 0,8 mm liegt. Durch diese Spanformnut soll der Nebenschneidenspanwinkel zwischen 10° und 20° eingestellt werden. Auch entlang der Hauptschneide erstreckt sich eine Spanformnut, die einen im Querschnitt gemessenen Krümmungsradius von 0.5 mm aufweist. Über reine Schrupp-Wendeschneidplatten wird in dieser Schrift nichts ausgeführt.

Aus der DE 28 40 610 C2 ist ein Schneideinsatz bekannt, der in der Spanfläche entlang der Schneidkanten Eindrückungen aufweist, deren Breite bzw. größte Ausdehnung parallel zur Schneidkante größer ist als der Abstand zwischen zwei benachbarten Eindrückungen. Jede dieser Eindrückungen durchbricht die Schneidkante, die hierdurch im Bereich der Durchbrechungen in ihrer Form verändert wird, d.h., sie bildet keine Gerade mehr, sondern weist im Bereich der Durchbrechungen Ausformungen auf, die in Spanablaufrichtung gesehen hinter den geraden Schneidkantenteilen liegen. Durch diese Maßnahme sollen im ablaufenden Span Stauchungen erzeugt werden, die zu einem Brechen des Spanes in kurze Stücke führen. Der Bereich einer Schneidecke soll jedoch frei von Eindrükkungen sein und statt dessen ein ebenes Spanflächenstück oder eine negative Verfestigungsfläche besitzen, um im Eckenbereich verstärkte Spanformstauchungen zu vermeiden. Die genannten Eindrückungen können nach der
DE 28 40 610 C2 auch in einer entlang der Schneidkante verlaufenden Spanformmulde angeordnet sein. Insbesondere wird in der genannten Druckschrift ein trigonförmiger Schneideinsatz zum Bohren angesprochen, der für Schrupp-Fräsarbeiten ungeeignet ist.

Die US-A 4 710 069 beschreibt einen Schneideinsatz, der entlang seiner Schneidkante eine Fase und im Anschluß an die Fase zu schneidkantenferneren Bereich hin eine nutförmige Ausnehmung aufweist. Die Grenzlinie zwischen der genannten Fase und der nutförmigen Ausnehmung wird durch mehrere gleich beabstandet angeordnete Vertiefungen durchbrochen, deren Tiefe kleiner als 0.1 mm sein soll. Die Vertiefungen sind im wesentlichen teilkugelförmige Ausnehmungen mit einem Krümmungsradius von 0,5 mm. Derartige Schneideinsätze sind jedoch lediglich für Dreh-Zerspanungen geeignet.

Die derzeit gängige Formgestaltung von Schrupp-Schneideinsätzen zeigt eine im Anschluß an die Schneidkante und über deren gesamte Länge sich erstreckende Spanformmulden. Im Bereich einer Schneidkantenecke ist diese Spanformmulde durch relativ höherliegende Versteifungsflächen unterbrochen. Das Schrupp-Schlicht-Zerspanen wird jedoch bei Schnittiefen durchgeführt, die etwa im Bereich von 0,5 mm bis 1 mm liegen. Hierbei wird im wesentlichen mit der abgerundeten Schneidecke geschnitten, so daß eine Veränderung der Spanformnut zu größeren Spanformwinkeln keine wirksame Verbesserung darstellt. Zudem sind einer Verlängerung einer Spanformnut in die Schneideckenbereiche hinein unter Verringerung der Breite der Versteifungsfläche schon dadurch Grenzen gesetzt, daß verbleibende scharfkantige Erhebungen, insbesondere im Schneideckenbereich, leicht zu Ausbröckelungen neigen, welche die Standzeit des Schneideinsatzes erheblich verringern.

Es ist daher Aufgabe der vorliegenden Erfindung, einen Schneideinsatz zum Schrupp-Schlichten zu schaffen, mit dem im Fräseinsatz die auftretenden Axialkräfte deutlich reduziert werden.

Diese Aufgabe wird durch den Schneideinsatz nach Anspruch 1 gelöst. Erfindungsgemäß ist, die Eindrückung ein Teilkugelsegment im Schneideckenbereich angeordnet und durchbricht beide dort angrenzenden Schneidkanten. Nach der Erfindung ist der Krümmungsradius der konkaven Eindrückungen zwischen 4 mm und 10 mm. Die maximale Tiefe der Eindrückung ist nicht größer als 0,4 mm bis 0,6 mm.

Entgegen der insbesondere in der DE 28 40 610 C2 offenbarten Lehre, den Schneideckenbereich frei von muldenförmigen Vertiefungen bzw. Eindrückungen zu lassen, zeigen erfindungsgemäß ausgestaltete Schneideinsätze erheblich reduzierte Schnittkräfte und hierdurch bedingt auch eine gegenüber herkömmlichen Schneideinsätzen verbesserte Standzeit. Durch die kugelkalottenförmige Ausnehmung im Schneideckenbereich lassen sich nämlich erheblich größere Spanwinkel bzw. bei dem in einem Werkzeughalter eingespannten Schneideinsatz größere effektive radiale wie axiale Spanwinkel realisieren. Die mit Ausnahme des Schneideckenbereiches lineare Schneidkante ist durch die Eindrückung bedingt in Richtung auf die Schneidecke im hinteren Teil konkav gekrümmt, wobei die Schneidecke etwa in Höhe des linear verlaufenden Schneidkantenniveaus oder geringfügig darunter gelegen ist. Dies wiederholt sich in entsprechender Weise bei der im Anschluß an die Schneidecke angrenzenden Schneidkante. Der Schneideinsatz wird beim Fräsen derart eingesetzt, daß vorzugsweise lediglich der von der Schneidecke abfallende konkave Schneidkantenteil auf beiden Seiten der Schneidecke wirksam schneidet. Je nach gewünschter Schnittiefe richtet sich die maximale Breite der Eindrückung im Schneideckenbereich. Im Bereich der wirksam schneidenden Schneidecke schließt sich in jedem Falle eine durch die Mulde bedingter abfallender Flankenteil an, der einen beliebigen gewünschten positiven Spanwinkel schafft.

Vorzugsweise ist die Eindrückung symmetrisch zu Schneideckenwinkelhalbierenden angeordnet.

Da die Schneidecke nur mit einer wirksamen Schnittiefe von 0,5 mm bis 1 mm benutzt wird, beträgt der maximale Durchmesser der Eindrückung 4 mm.

Um eine hinreichende Schneideckenstabilität zu erhalten, soll der Spanwinkel γ₀ im Schneideckenbereich zwischen +5° und +20° liegen, vorzugsweise zwischen +8° und +15°.

Damit der Schneideinsatz nicht nur auf einer Seite, sondern sowohl auf der Dachfläche als auch auf der Bodenfläche verwendet werden kann, ist zur Schaffung einer beidseitigen Auflagefläche ein mittleres Spanflächenplateau vorgesehen, das die Schneidkantenebene überragt. Das mittlere Schneidflächenplateau besitzt nach einer weiteren Ausgestaltung der Erfindung nasenförmige Vorsprünge, die in den rückwärtigen Bereich der Eindrückungen hineinragen.

Vorzugsweise besitzen die erfindungsgemäßen Schneideinsätze eine regelmäßige 6-Eck-Form, bei der jeweils nebeneinanderliegende Schneidkanten unter einem stumpfen Winkel von 120° angeordnet sind. Die Schneidkanten sind abgerundet, wobei nach einer Ausgestaltung der Erfindung die Schneideckenabrundung einen Radius zwischen 0,4 mm und 3 mm aufweist. Wie bereits erwähnt, ist der Schneideinsatz beidseitig verwendbar ausgebildet, so daß sich zwölf zum Zerspanen verwendbare Schneidecken ergeben.

Der erfindungsgemäße Schneideinsatz wird bevorzugt in einem als Fräserkörper ausgebildeten Werkzeughalter in einer hierfür vorgesehenen Ausnehmung (Plattensitz) eingesetzt und befestigt. Zur Befestigung dienen Klemmkeile zur Fixierung des Schneideinsatzes in bezug auf die Werkzeugachse. Es ist jedoch ebenso möglich, die Schneideinsätze in Kassetten anzuordnen, die dann in der gewünschten Ausrichtung im Werkzeugträger befestigt werden. Erfindungsgemäß wird eine Ausrichtung der Schneideinsätze zum Schruppen gewählt, bei der sich ein effektiver axialer Spanwinkel γₚ von +5° bis +10° und/oder ein effektiver radialer Spanwinkel γ_{f} von 0° bis +8° in der Schneideinsatzausnehmung ergibt.

Ein Ausführungsbeispiel der Erfindung ist in den Zeichnungen dargestellt. Es zeigen
- Fig. 1: eine erfindungsgemäße Wendeschneidplatte in einer Frontansicht,
- Fig. 2: eine Teilschnittansicht dieser Wendeschneidplatte,
- Fig. 3: die Wendeschneidplatte in bezug auf ihre Einbaulage,
- Fig. 4, 5: jeweils Teilansichten der erfindungsgemäßen Wendeschneidplatte zur Darstellung der Spanwinkel im Eckenbereich,
- Fig. 6: denselben Teilbereich nach Fig. 5 beim FräsEinsatz,
- Fig. 7, 8: jeweils Teilansichten eines Schneideckenbereiches zur Veranschaulichung der KugelkalottenFormgestaltung und -lage,
- Fig. 9: Schneidecken-Teilansicht zur Darstellung des Schneidkanten-Spanwinkels γ auf der Spanfläche,
- Fig. 10: Schneidecken-Teilansicht zur Darstellung des radialen Spanwinkels γᵣ.

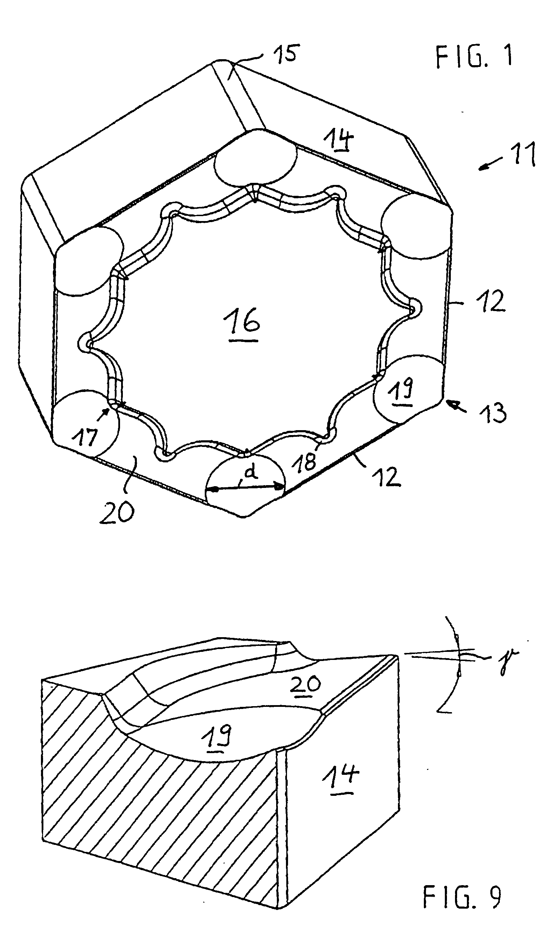

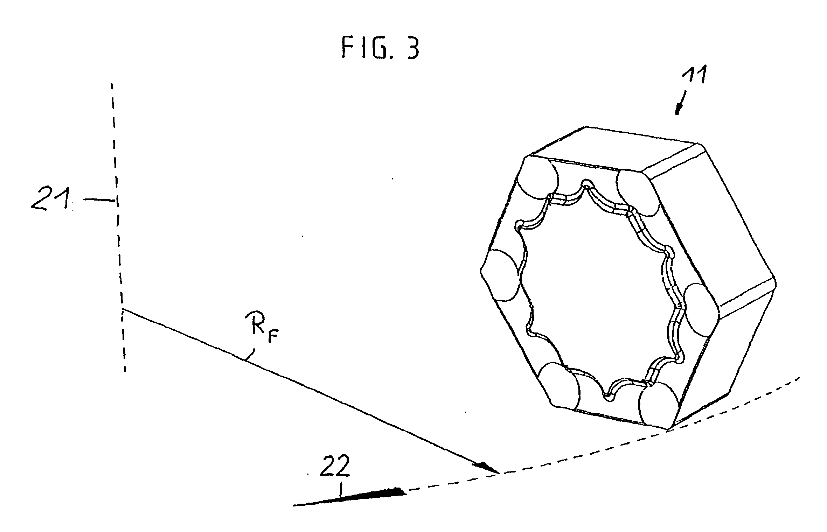

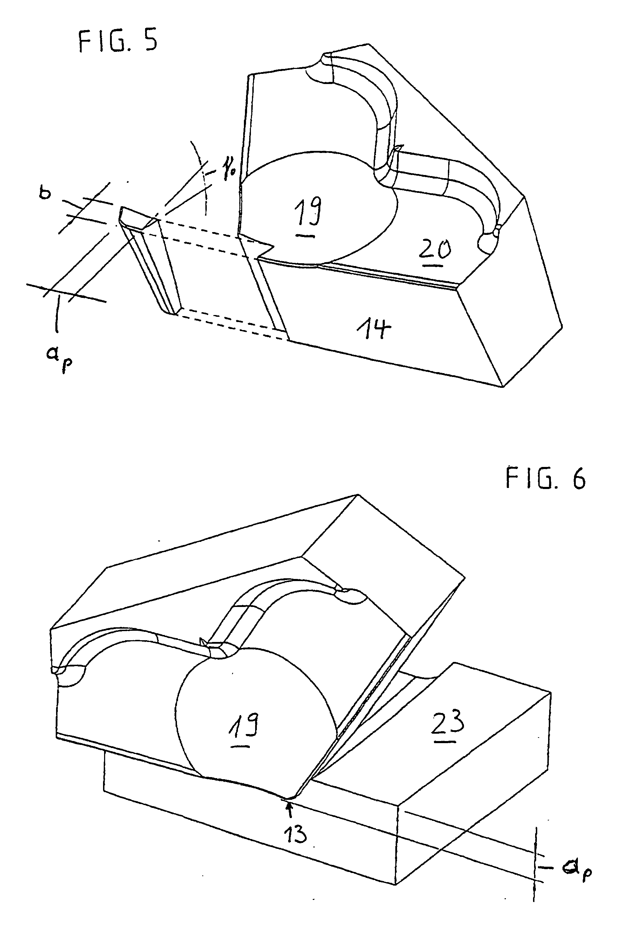

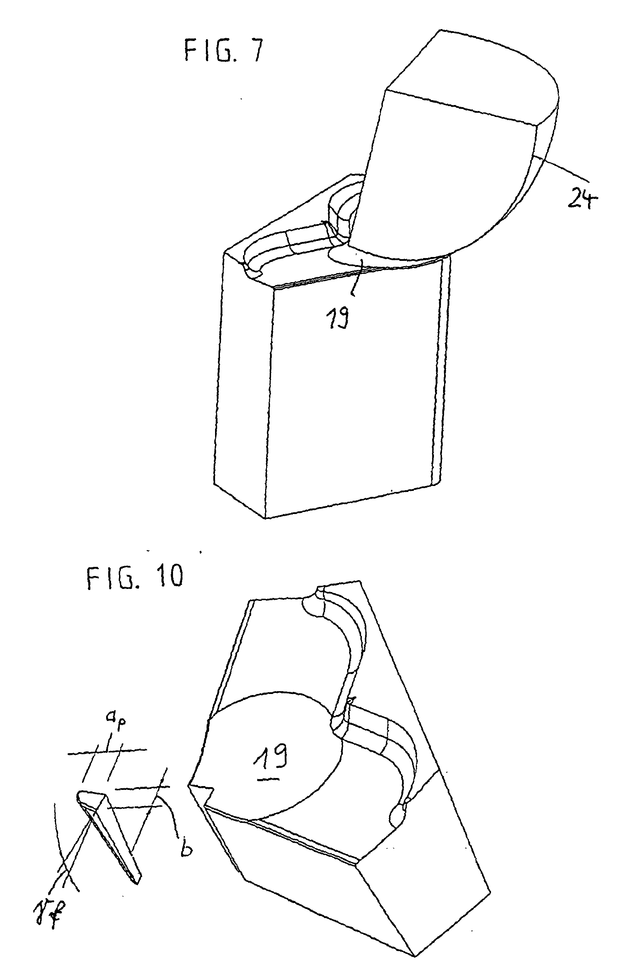

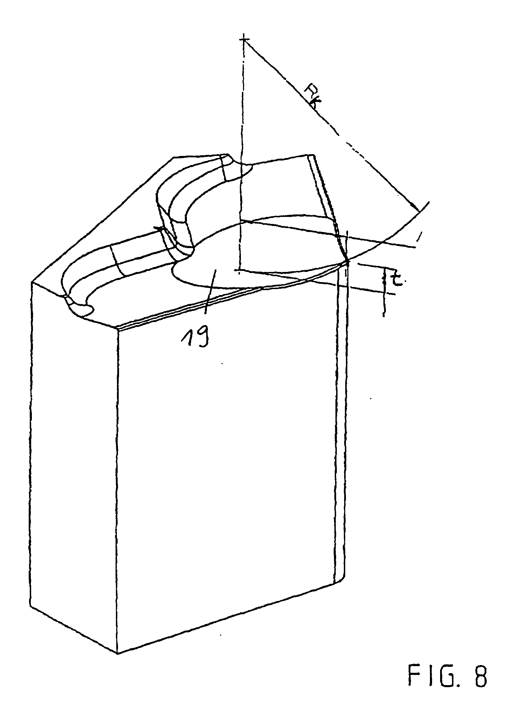

Der in den Zeichnungen dargestellte Schneideinsatz 11 besitzt eine regelmäßig-sechseckig geformte Spanfläche, die durch sechs Schneidkanten 12 begrenzt wird, wovon nebeneinanderliegende Schneidkanten 12 eine Schneidecke 13 bilden. Die Schneidekken 13 sind abgerundet. wobei sich den Schneidkanten 12 jeweilige ebene Freiflächen 14 bzw. den Schneidekken gerundete Freiflächenabschnitte 15 anschließen. Auf der Spanfläche besitzt der Schneideinsatz ein mittleres Spanflächenplateau, das sternförmig ausgebildet ist und jeweils in Richtung der Schneidecke ragende nasenförmige Vorsprünge 17 zeigt. Zwischen zwei Schneidecken sind weitere Vorsprünge 18 angeordnet, die etwa auf die Mitte der betreffenden Schneidkante 12 gerichtet sind. Der Schneideinsatz 11 besitzt erfindungsgemäß kugelkalottenförmige Eindrückungen 19 im Bereich einer jeden Schneidecke 13 auf der Spanfläche. Parallel zu der Schneidkante verläuft außerhalb des Bereiches der kugelkalottenförmigen Eindrückungen 19 eine sich entlang der Schneidkante 12 erstrekkende Spanformnut 20. Wie insbesondere aus Fig. 1 zu entnehmen ist, bestehen die nasenförmigen Vorsprünge 17 und 18 aus einem unteren konkav verlaufenden Teil und einem oberen konvex verlaufenden Teil. Die Vorsprünge können jedoch auch ebene abfallende Flanken oder konvex bzw. konkav ausgeformte Flanken besitzen. Die Wendeschneidplatte besitzt eine Dicke d von beispielsweise 5,56 mm und einen Inkreisdurchmesser von 16,2 mm. Die doppelseitig ausgebildete Wendeschneidplatte wird vorzugsweise zum Fräsen in einen Werkzeughalter eingesetzt, der um die Rotationsachse 21 dreht. Die Schneideinsätze 11 laufen auf einem Fräserradius R_{f}, wobei der Schneideinsatz (neben weiteren Schrupp-Schneideinsätzen in Richtung des Pfeiles 22 bewegt wird. Die hierbei ausgeführte Zerspanungsoperation ist im Detail Fig. 6 zu entnehmen. Das Werkstück 23 wird mit einem Stirn-Planfräser in einer Schnittiefe aₚ bearbeitet wobei mehrere Schrupp-Schneideinsätze 11 zum Einsatz kommen.

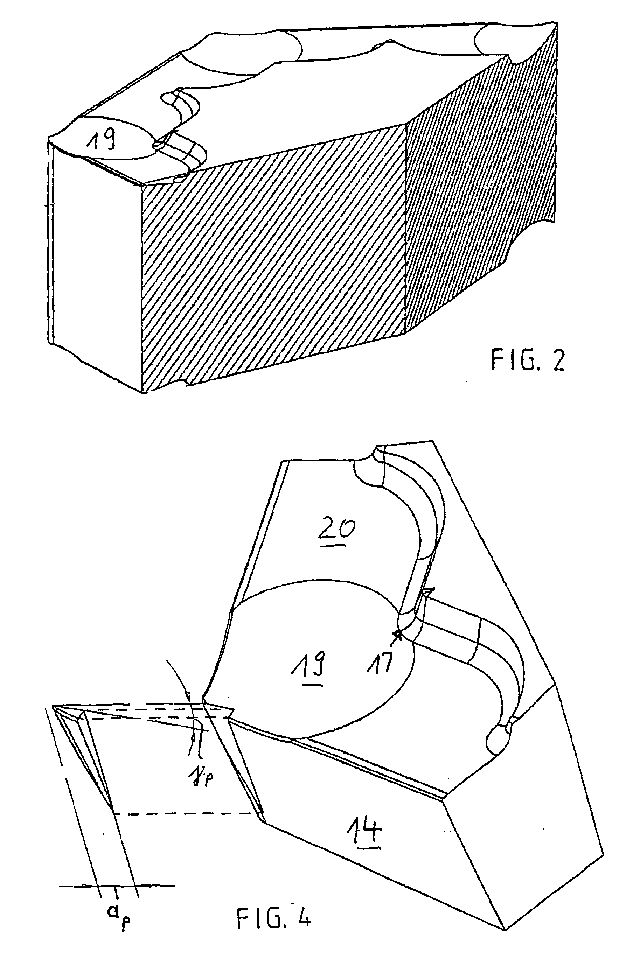

Bei diesen Fräsoperationen ist ein positiver axialer Spanwinkel γₚ über die beschriebene Kalottenausbildung vorhanden (siehe Fig. 4). Fig 5 zeigt, bezogen auf eine Schnitttiefe aₚ von beispielsweise 0,5 mm einen Spanwinkel γ₀ im Abstand b von ca. 0,5 mm von der Schneidkante einer Maßlänge, die etwa dem hier mit 0,5 mm gewählten Zahnvorschub f_{z} entspricht.

Aus Fig. 7 wird deutlich, daß die Eindrückung 19 Teil eines Kugelkalottensegmentes ist. Die betreffende Kugel bzw. Teilkugel 14 ist Fig. 7 zu entnehmen.

Der betreffende Kugelradius R_{K} liegt zwischen 4 mm und 10 mm, die maximale Kalottentiefe t bei Werten unterhalb von 0,4 mm bis 0,6 mm.

Fig. 9 zeigt den Spanwinkel γ, unter dem der an den geradlinigen Teil der Schneidkante 12 angrenzenden Spanflächenbereich geneigt ist. Der radiale Spanwinkel γ_{f}, der sich aus der Einbaulage des Schneideinsatzes im Werkzeughalter ergibt, ist in Fig. 10 dargestellt.

Mit Schneideinsätzen 11 bestückte Fräsersind zum Schneiden von einem Werkstück 23 eingesetzt worden. Im Unterschied zu den herkömmlichen nach dem Stand der Technik bekannten sechseckigen Wendeschneidplatten zeigen sich Verringerungen der Passivkraft Fₚ von ca. 40 %.

## Patentansprüche

1. Schneideinsatz (11) zur spanenden Bearbeitung von Werkstücken (23), nämlich zur Schrupp-Schlicht-Bearbeitung beim Grauguss-Plan-Fräsen, mit mehreren die Spanfläche begrenzenden Schneidkanten (12), von denen zwei aneinandergrenzende Schneidkanten (12) eine Schneidecke (13) bilden und mit mindestens einer muldenförmigen, die Schneidkante (12) durchbrechenden Eindrückung, wobei die Eindrückung (19) im Schneideckenbereich (13) angeordnet ist und beide dort angrenzenden Schneidkanten (12) durchbricht
**dadurch gekennzeichnet,**
**dass** die Eindrückung (19) ein Teilkugelsegment ist und dass der Spanwinkel (γ₀) im Schneideckenbereich zwischen +5° und +20° liegt, wobei die Eindrückung (19) einen Krümmungsradius (R_{K}) zwischen 4 mm und 10 mm aufweist und die maximale Tiefe (t) der Eindrückung (19) zwischen 0,4 mm und 0,6 mm liegt.

2. Schneideinsatz nach Anspruch 1, **dadurch gekennzeichnet, dass** die Eindrückung (19) symmetrisch zur Schneideckenwinkelhalbierenden angeordnet ist.

3. Schneideinsatz nach einem der Ansprüche 1 oder 2, **dadurch gekennzeichnet, dass** der maximale Durchmesser (d) der Eindrückung (19) 4 mm beträgt.

4. Schneideinsatz nach einem der Ansprüche 1 bis 3, **dadurch gekennzeichnet, dass** der Spanwinkel (γ₀) im Schneideckenbereich zwischen +8° und +15° liegt.

5. Schneideinsatz nach einem der Ansprüche 1 bis 4, **dadurch gekennzeichnet, dass** in der Spanfläche ein mittleres Spanflächenplateau (16) mit einem in den rückwärtigen Bereich der Eindrückung (19) hineinragenden nasenförmigen Vorsprung (17) angeordnet ist.

6. Schneideinsatz nach einem der Ansprüche 1 bis 5, **gekennzeichnet durch** eine regelmäßige 6-Eck-Form, vorzugsweise mit abgerundeten Schneidecken (13).

7. Schneideinsatz nach Anspruch 6, **dadurch gekennzeichnet, dass** die Schneideckenabrundung einen Radius zwischen 0,4 mm und 3 mm aufweist.

8. Werkzeug, bestehend aus einem Werkzeughalter mit mindestens einer Ausnehmung zur Aufnahme eines Schneideinsatzes (11) nach einem der Ansprüche 1 bis 7, **dadurch gekennzeichnet, dass** der Schneideinsatz (11) unter einem effektiven axialen Spanwinkel (γₚ) von +5° bis +10° und/oder einem effektiven radialen Spanwinkel (γ_{f}) von 0° bis +8° in der Schneideinsatzausnehmung angeordnet ist.

## Claims

1. Cutting insert (11) for machining of workpieces (23), namely for the roughing-smoothing machining of gray cast iron by surface milling, having a plurality of cutting edges (12) bounding the rake surface of which two adjoining cutting edges (12) form a cutting corner (13) and at least one trough-shaped indentation interrupting the cutting edges (12), whereby the indentation (19) is arranged in the cutting corner region (13) and extends into both of the cutting edges forming the cutting corner,
**characterised in that**
the indentation is a part spherical segment and that the rake angle (γ₀) lies between +5° and +20° in the cutting corner region, whereby the indentation (19) has a radius of curvature (R_{K})between 4 mm and 10 mm and the maximum depth (t) of the indentation (19) lies between 0,4 mm and 0,6 mm.

2. Cutting insert according to claim 1, **characterised in that** the indentation (19) is arranged symmetrically to the cutting corner angle bisector.

3. Cutting insert according to claim 1 or 2, **characterised in that**, the maximum diameter (d) of the depression (19) amounts to 4 mm.

4. Cutting insert according to claim 1 to 3, **characterised in that** the rake angle (γ₀) lies between +8° and +15°.

5. Cutting insert according to claim 1 to 4, **characterised in that** the central rake surface plateau (16) is arranged centrally in the rake surface and has nose-shaped projections (17) in the rearward region of the indentations (19).

6. Cutting insert according to claim 1 to 5, **characterised by** a regular six-corner shape, preferably with rounded cutting corners (13).

7. Cutting insert according to claim 6, **characterised in that** the cutting corner rounding has a radius between 0,4 mm and 3 mm.

8. Tool comprised of a tool holder with at leas one recess for receiving a cutting insert (11) according to one of claims 1 to 7, **characterised in that** the cutting insert (11) is arranged with an effective axial cutting angle (γ_{f}) of 0° to +8° in the cutting insert recess.

## Revendications

1. Insert de coupe (11 ) pour l'usinage à enlèvement de copeaux de pièces (23), à savoir pour l'usinage de dégrossissage et de finissage lors du fraisage plan de fonte grise, avec plusieurs tranchants (12) limitant la face de coupe, dont deux tranchants contigus (12) forment un coin de coupe (13), et avec au moins un enfoncement en forme de creux qui perce le tranchant (12), l'enfoncement (19) étant disposé dans la zone du coin de coupe (13) et perçant les deux tranchants (12) y contigus,
**caractérisé par le fait**
**que** l'enfoncement (19) est un segment sphérique partiel et que l'angle de coupe (γ₀) dans la zone du coin de coupe est compris entre +5° et +20°, l'enfoncement (19) présentant un rayon de courbure (R_{K}) compris entre 4 mm et 10 mm et la profondeur maximale (t) de l'enfoncement (19) étant comprise entre 0,4 mm et 0,6 mm

2. Insert de coupe selon la revendication 1, **caractérisé par le fait que** l'enfoncement (19) est disposé de façon symétrique par rapport à la bissectrice du coin de coupe.

3. Insert de coupe selon l'une des revendications 1 ou 2, **caractérisé par le fait que** le diamètre maximal (d) de l'enfoncement (19) est de 4 mm.

4. Insert de coupe selon l'une des revendications 1 à 3, **caractérisé par le fait que** l'angle de coupe (γ₀) dans la zone du coin de coupe est compris entre +8° et +15°.

5. Insert de coupe selon l'une des revendications 1 à 4, **caractérisé par le fait qu'**un plateau central de face de coupe (16) ayant une projection en forme de nez (17) s'étendant dans la zone arrière de l'enfoncement (19) est disposé dans la face de coupe.

6. Insert de coupe selon l'une des revendications 1 à 5, **caractérisé par** une forme hexagonale régulière, de préférence avec des coins de coupe (13) arrondis.

7. Insert de coupe selon la revendication 6, **caractérisé par le fait que** l'arrondi des coins de coupe présente un rayon compris entre 0,4 mm et 3 mm.

8. Outil se composant d'un porte-outil avec au moins un évidement destiné à recevoir un insert de coupe (11) selon l'une des revendications 1 à 7, **caractérisé par le fait que** l'insert de coupe (11) est disposé sous un angle de coupe axial effectif (γₚ) de +5° à +10° et/ou sous un angle de coupe radial effectif (γ_{f}) de 0° à +8° dans l'évidement d'insert de coupe.
